# FASCICULE DE BREVET EUROPEEN

(11) **EP 3 531 215 B1**
(45) Date de publication et mention de la délivrance du brevet: **16.07.2025**
(21) Numéro de dépôt: 19158727.8
(22) Date de dépôt: 22.02.2019
(51) Int. Cl.: G05B 15/02, G08C 17/02, G05B 19/042

(54) **PROCÉDÉ DE FONCTIONNEMENT D'UN MODULE DE COMMANDE D'UNE CHARGE ÉLECTRIQUE**
FUNKTIONSVERFAHREN FÜR EIN ELEKTRISCHES LASTSTEUERMODUL
METHOD FOR OPERATING A CONTROL MODULE FOR AN ELECTRICAL LOAD

(30) Priorité: 23.02.2018 FR 1870197
(43) Date de publication de la demande: 28.08.2019
(73) Titulaire: Somfy Activites SA, 74300 Cluses (FR)
(72) Inventeur: BIORET, Jérôme, 74000 ANNECY (FR); MAËS, Jean-Luc, 74230 THONES (FR); ROBIN, Frédéric, 74800 CORNIER (FR)
(74) Mandataire: Clabaut, Muriel

(56) Documents cités:
- DE-A1- 102014 210 000
- US-A1- 2011 302 282
- AWAG ELEKTROTECHNIK AG: "UPJ230/12 Bedienungsanleitung UP-Multifunktions-Jalousieaktor 1-Kanal", INTERNET, 3 March 2017 (2017-03-03), XP055522824, Retrieved from the Internet <URL:https://www.omnio.ch/fileadmin/dateien/pdf/3312000_Bd_Be_UPJ230_12_V04_022.pdf> [retrieved on 20181120]

## Description

La présente invention concerne le domaine des modules de commande d'une charge électrique telle qu'une lampe, ou divers équipements électriques tels que des pompes de piscine, chauffe-eau, moteurs, ventilateurs, congélateurs, radiateurs, télévisions, électroménagers, appareils d'arrosage de jardin...

De tels modules de commande sont insérés en série sur un circuit de commande câblé de la charge électrique. Ces modules de commande comprennent notamment un récepteur radiofréquence, un commutateur électronique, tel qu'un relais à contact sec et une unité électronique telle qu'un microprocesseur, dont une entrée est reliée au récepteur radiofréquence et dont une sortie active le commutateur électronique.

Bien que ces modules de commande soient prévus de base pour permettre une commande à distance de la charge électrique, il est souhaitable qu'ils puissent gérer une pluralité de fonctions autres que la simple commande d'allumage ou d'extinction de la charge.

Ces modules de commande sont généralement installés en rénovation dans des espaces très restreints, qui n'étaient à l'origine prévus que pour le passage de câbles. Ils se doivent donc d'être de faible volume pour être invisibles une fois la charge électrique, par exemple un luminaire, réinstallé avec le module récepteur. Les moyens d'interface homme-machine, qui permettent notamment à un installateur de programmer le module de commande, sont donc restreints.

Le module de commande d'une charge électrique doit donc pouvoir s'intégrer facilement sur le câblage électrique d'une installation existante et apporter un choix de multiples fonctions de commande de la charge électrique.

Le document XP055522824 « UPJ230/12 Bedienungsanleitung UP-Multifunktions-Jalousieaktor 1-Kanal » est une notice d'installation d'un module de commande d'une charge électrique. Il décrit un procédé de fonctionnement et de configuration du module de commande par le biais d'un un potentiomètre rotatif et d'une touche de configuration.

La présente invention a pour but de simplifier l'ergonomie de configuration, dans le cadre d'un module de commande ayant une touche de configuration et une diode électroluminescente.

A cet égard, la présente invention vise un procédé selon la revendication 1.

Selon une caractéristique avantageuse, le procédé de fonctionnement comprend une étape de retour dans l'état initial du mode de configuration après une durée prédéterminée suivant la sélection d'un état de configuration.

Selon une caractéristique avantageuse, le procédé de fonctionnement comprend une étape de retour dans le mode de fonctionnement après une durée prédéterminée sans action sur la touche de configuration dans le mode de configuration.

Selon une caractéristique avantageuse, le procédé de fonctionnement comprend une étape de retour dans le mode de fonctionnement suite à une coupure d'alimentation du module de commande.

Selon une caractéristique avantageuse, le procédé de fonctionnement est tel que chaque séquence particulière d'état de la diode électroluminescente débute par un passage de la diode électroluminescente par un état éteint, suivi par un clignotement de la diode.

Selon une caractéristique avantageuse, le module de commande comprenant une touche de programmation, le procédé de fonctionnement comprend une étape d'appairage avec un émetteur radiofréquence distant, réalisée suite à une action sur la touche de programmation.

Selon une caractéristique avantageuse, le procédé de fonctionnement est tel que les actions sur la touche de programmation sont ignorées lorsque le module de commande se trouve dans le mode de configuration.

Selon une caractéristique avantageuse, le procédé de fonctionnement est tel qu'un état de configuration est choisi parmi les catégories de configuration suivantes :
- Remise à zéro des paramètres de configuration
- Choix du type d'interrupteur filaire associé au module de commande,
- Sélection du statut après une coupure de courant
- Gestion de temporisation.

Selon une caractéristique avantageuse, le procédé de fonctionnement comprend une séquence d'étapes de duplication de la configuration d'un premier module de commande vers un deuxième module de commande.

Ainsi, la distinction entre le mode de fonctionnement et le mode de configuration est clairement définie et applicable quelle que soit la nature de la charge électrique. D'autre part, à la fin de chaque étape de configuration, le retour à l'état initial du mode de configuration est également clairement identifié.

La présente invention vise également un module de commande selon la revendication 10.

Ainsi, le module de commande est apte à
- Distinguer des appuis simples d'appuis particuliers, dont la durée d'appui est différente de celle des appuis simples, sur la touche de configuration, un premier appui particulier sur la touche de configuration permettant le basculement du module du mode de fonctionnement au mode de configuration, un deuxième appui particulier permettant la sortie du mode de configuration et le retour au mode de fonctionnement,
- Sélectionner un état de configuration parmi une pluralité d'états de configuration disponibles,
- Comptabiliser un nombre d'appuis simples dans le mode de configuration pour sélectionner un état de configuration parmi au moins trois états de configuration,
- Sélectionner l'état de configuration choisi en fonction du nombre d'appuis simples,
- Retourner dans l'état initial du mode de configuration en l'absence d'appui simple pendant une durée déterminée.
- Quitter une séquence de configuration en cas d'erreur, sans nécessairement quitter le mode de configuration. En cas d'erreur de comptage, l'utilisateur a la possibilité de quitter le mode de configuration et/ou de retourner à l'état initial du mode de configuration sans enregistrement de l'état sélectionné.

L'invention sera mieux comprise et d'autres avantages de celle-ci apparaîtront plus clairement à la lumière de la description qui va suivre d'un mode de réalisation d'un module de commande, faite en se référant aux dessins annexés dans lesquels :
- la figure 1 est une représentation schématique d'une installation domotique comprenant un module de commande d'une charge électrique d'éclairage,
- la figure 2 est une représentation schématique du module de commande d'éclairage,
- la figure 3 est une représentation schématique d'une variante du module de commande d'éclairage,
- la figure 4 est un ordinogramme d'un procédé de fonctionnement du module de commande selon l'invention,
- la figure 5 est un diagramme illustrant des étapes de communication entre deux modules de commande selon l'invention.

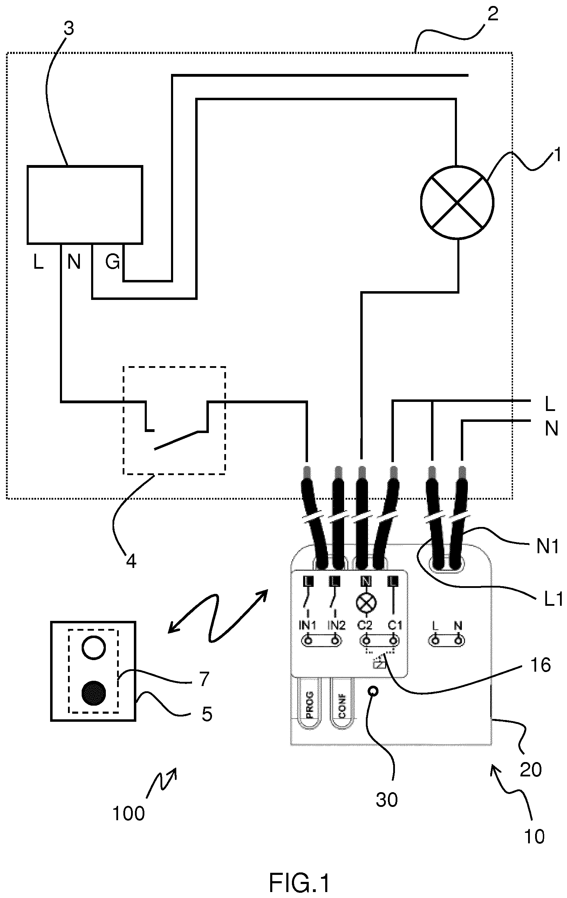

La figure 1 montre une installation domotique 100 installée dans un bâtiment. L'installation domotique comprend d'une part, une charge électrique 1, dans l'exemple ci-dessous une charge électrique d'éclairage telle qu'une lampe d'un luminaire. La charge électrique peut toutefois être au autre type d'équipement électrique tel qu'une pompe, un chauffe-eau, un moteur, un ventilateur, un radiateur, un appareil de télévision, un appareil électroménager ou un appareil d'arrosage de jardin. La charge électrique 1 est intégrée dans un circuit électrique 2 alimenté par le secteur et comprenant des conducteurs d'alimentation Phase L et Neutre N. Un tableau électrique 3 fournit l'alimentation secteur aux conducteurs d'alimentation L et N. Le tableau électrique 3 représenté comprend également un conducteur G relié à la terre.

L'installation domotique 100, en particulier le circuit électrique 2 comprend en outre un interrupteur mural 4, adapté pour agir sur l'ouverture ou la fermeture du circuit électrique 2 et ainsi, adapté pour commander l'état allumé ou éteint de la charge électrique 1.

L'installation domotique 100 comprend au moins un émetteur radiofréquence distant 5, tel qu'une télécommande, muni d'une interface de commande 7.

L'installation domotique 100 comprend également un module de commande 10, lequel est inséré en série sur le circuit électrique 2.

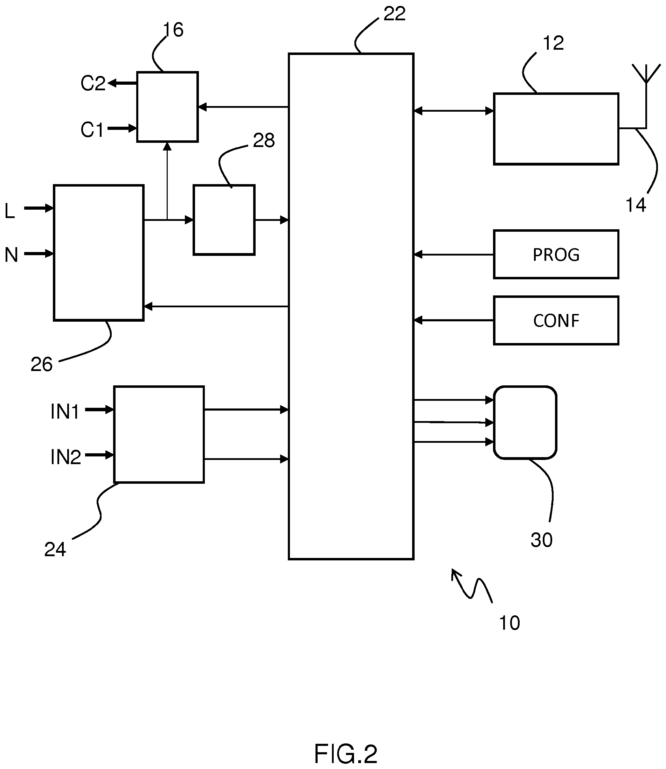

Ainsi qu'illustré sur la figure 2, le module de commande 10 comprend un module d'émission et de réception radiofréquence 12 ou module radiofréquence. Le module radiofréquence 12 comprend notamment des moyens électroniques pour recevoir et/ou émettre des signaux radiofréquence en provenance d'un émetteur radiofréquence distant 5, dont une antenne 14.

Le module de commande 10 et l'émetteur radiofréquence distant 5 ont au préalable échangé des paramètres d'authentification, selon des procédés connus, de sorte à ce qu'ils sont autorisés à communiquer l'un avec l'autre, notamment de manière bidirectionnelle, comme indiqué par la double flèche. Ces paramètres d'authentification sont par exemple un ou plusieurs identifiants et/ou une clé de cryptage. Le module de commande 10 et l'émetteur radiofréquence distant 5 sont dits appairés lorsqu'ils ont échangé ces paramètres d'authentification, de sorte qu'un ordre de commande, émis au travers de l'interface de commande 7 de l'émetteur radiofréquence distant 5 puisse être reçu, puis exécuté par le module de commande 10, conformément à un protocole de communication.

Le module de commande 10 comprend une unité électronique 22, telle qu'un microprocesseur. Le module de commande 10 comprend également un commutateur électronique 16, tel qu'un relais, un triac, un transistor, ou tout autre élément permettant de commuter un circuit électrique. Ce commutateur électronique 16 est placé en série avec des conducteurs électriques C1, C2 de sorte à ouvrir ou fermer le circuit électrique 2. Le module de commande peut également comprendre tout composant électronique matériel et/ou tout composant logiciel pour la mise en œuvre du procédé, comme par exemple une mémoire (non représentée) ou des programmes d'ordinateur stockés dans une mémoire, par exemple une mémoire du microprocesseur 22.

Le module de commande 10 comprend également des conducteurs d'alimentation L1, N1, dépassant d'un boîtier 20 et adaptés à être connectés aux lignes d'alimentation secteur L et N, les conducteurs électriques référencés C1, C2, adaptés à être connectés l'un à une ligne d'alimentation secteur et l'autre à la charge électrique d'éclairage et au moins un conducteur d'entrée IN1, adapté à être connecté en série ici avec l'interrupteur mural 4. Les conducteurs L1 et N1 servent à l'alimentation du module de commande. Ils sont reliés à un premier bloc 26 convertisseur de tension, lequel permet notamment de redresser et d'abaisser la tension secteur disponible à un premier niveau de tension, en particulier une très basse tension, de l'ordre de 5 à 12V DC, permettant d'alimenter le commutateur électronique 16. Un deuxième bloc 28 abaisseur de tension, permet d'abaisser la très basse tension disponible en sortie d'un premier bloc 26 convertisseur de tension, à un deuxième niveau de tension, en particulier une très basse tension, de l'ordre de 3V, permettant d'alimenter le microprocesseur 22.

Dans un mode de réalisation alternatif, le module de commande 10 peut également comprendre une batterie (non représentée), laquelle permet l'alimentation du module de commande 10 en l'absence d'alimentation secteur, ou avant le branchement du module de commande 10 dans le circuit électrique 2. Cette batterie peut ainsi alimenter le module de commande 10 pour la mise en œuvre tout ou partie du procédé selon l'invention.

Une entrée du microprocesseur 22 est reliée au module d'émission et de réception radiofréquence 12, une entrée du microprocesseur 22 est reliée au conducteur d'entrée IN1 au travers d'un bloc 24 d'analyse de tension. Cette entrée du microprocesseur fournit ainsi une information sur l'état (activé ou non) de l'interrupteur mural 4. Ce bloc 24 d'analyse de tension peut également fournir un signal sur une autre entrée du microprocesseur, relative à l'activation ou non d'un deuxième interrupteur mural, non représenté, par le biais d'un deuxième conducteur d'entrée IN2.

Une sortie du microprocesseur 22 agit sur le commutateur électronique 16. Le fonctionnement du module de commande 10 est le suivant : lorsqu'un utilisateur agit sur l'interrupteur mural 4 ou sur l'interface de commande 7 de l'émetteur radiofréquence distant pour allumer la lampe, l'information est reçue par le microprocesseur 22 qui analyse l'information en entrée et agit sur le commutateur électronique 16 pour fermer le circuit électrique 2. La lampe est alimentée et s'allume en conséquence. Inversement, lorsqu'un utilisateur agit sur l'interrupteur mural 4 ou sur l'interface de commande 7 de l'émetteur radiofréquence distant pour éteindre la lampe, l'information est reçue par le microprocesseur 22 qui analyse l'information en entrée et agit sur le commutateur électronique 16 pour ouvrir le circuit électrique 2. La lampe n'est plus alimentée et s'éteint en conséquence.

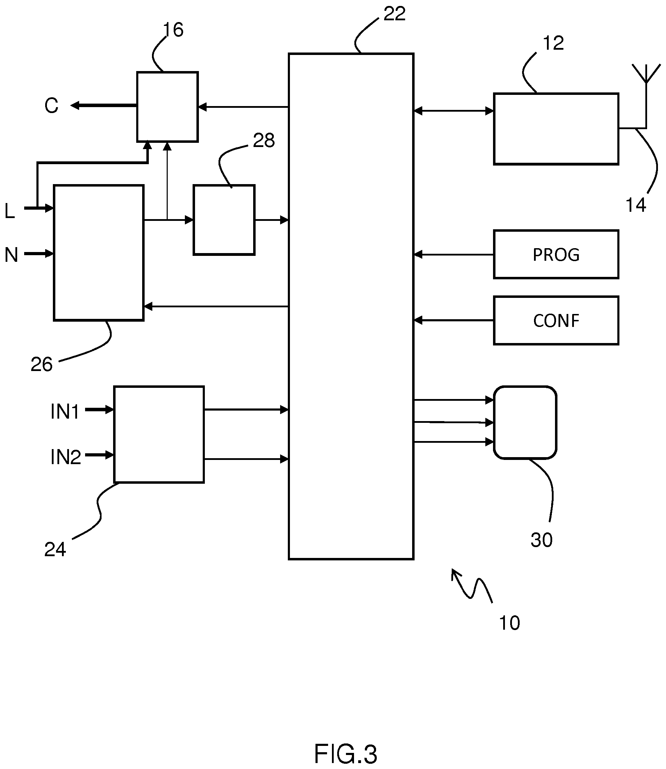

Selon une variante représentée à la figure 3, le commutateur électronique 16 est connecté à l'une des lignes d'alimentation secteur, en particulier à une ligne de phase L. Le commutateur électronique 16 pilote la connexion de la phase L à un conducteur de sortie C relié à la charge électrique, en fonction de l'état de la sortie du microprocesseur 22. Le conducteur de sortie C est appelé « phase commutée ».

Le module de commande tel que décrit ci-dessus permet de mettre en œuvre des commandes basiques d'allumage ou d'extinction de la charge électrique d'éclairage.

Toutefois, il est intéressant de pouvoir ajouter des fonctions de commande de la charge électrique d'éclairage, dans la mesure où l'intégration d'un émetteur radiofréquence distant 5 avec une interface de commande 7 qui peut être évoluée (comprenant notamment un écran ou un afficheur) permet de sélectionner une commande parmi une pluralité de fonctions de commande, correspondant chacune à un état de configuration sélectionnable dans le module de commande.

L'invention a trait notamment à la configuration du module de commande 10, de sorte à ce qu'il puisse s'intégrer facilement dans une installation déjà existante et autoriser une pluralité de fonctions de commande.

Le module de commande 10 comprend à cet effet une interface homme-machine 11 comprenant une touche de configuration CONF, sous forme d'un bouton poussoir, et une diode électroluminescente 30. Par interface homme-machine, on entend une interface au travers de laquelle une personne, un installateur ou un utilisateur, peut interagir avec le module de commande. Un bouton poussoir est notamment un bouton qui doit être maintenu appuyé sans quoi il retourne dans une position de repos. Il peut être qualifié d'interrupteur à position momentanée.

Selon l'invention, la configuration de multiples états de configuration intervient à partir de la seule touche de configuration CONF. Autrement dit, les étapes de configuration du module de commande sont réalisées à partir de la seule touche de configuration CONF.

Le module de commande 10 est adapté à sélectionner des états de configuration parmi les catégories suivantes :
- Remise à zéro des paramètres de configuration,
- Choix du type d'interrupteur filaire associé au module de commande,
- Sélection du statut après une coupure de courant,
- Gestion de temporisation.

A chacune des catégories peut correspondre plusieurs états de configuration. Des exemples de catégories et états de configuration sont résumés dans le tableau suivant (Table 1) :

**Table 1**

| REFERENCE | CATEGORIE | ETAT DE CONFIGUATION |
|---|---|---|
| A1 | Entrée/Sortie du mode de configuration | Entrée dans le mode de configuration |
| A2 | | Sortie du mode de configuration |
| A3 | RAZ | Configuration par défaut |
| E1 | Type d'interrupteur mural (Entrée 1) | Bouton poussoir (Défaut) |
| E2 | | Interrupteur à bascule |
| E3 | Type d'interrupteur mural (Entrée 2) | Bouton poussoir (Défaut) |
| E4 | | Interrupteur à bascule |
| E5 | Statut après coupure d'alimentation | Etat mémorisé (Défaut) |
| E6 | | Toujours éteint |
| E7 | Temporisation | Pas de temporisation, illimité (Défaut) |
| E8 | | 1 min |
| E9 | | 3min |
| E10 | | 5 min |
| E11 | | 10 min |
| E12 | | 30 min |
| E13 | | Sécurité 4h |

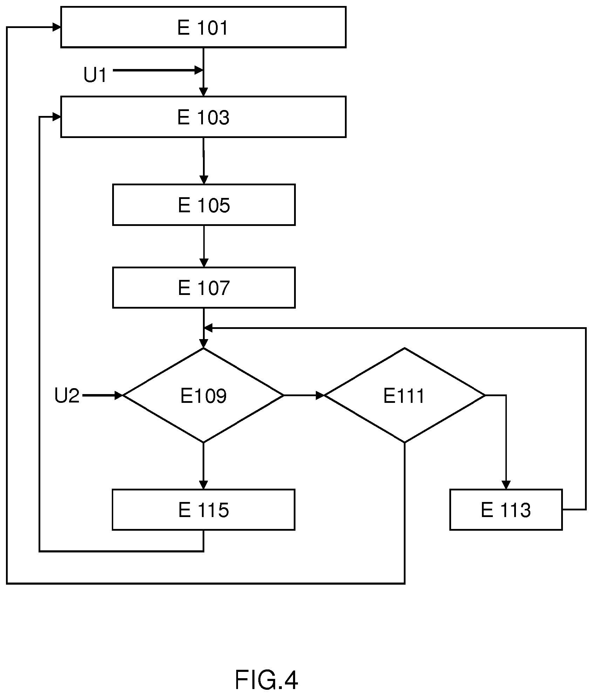

Le procédé de fonctionnement du module de commande 10 est décrit ci-après, en relation avec la figure 4.

Le procédé de fonctionnement comprend une étape E101 dans laquelle il se trouve en mode de fonctionnement. Une action U1 sur la touche de configuration provoque l'entrée du module de commande 10 dans un état initial E0 du mode de configuration au cours d'une étape E103. Cet appui U1 est notamment un appui particulier, d'une durée supérieure à une durée prédéfinie t1. L'entrée dans le mode de configuration provoque également l'allumage en continu de la diode électroluminescente 30 au cours d'une étape E105. Les étapes E103 et E105 peuvent être simultanées. A l'entrée dans le mode de configuration, un compteur n est également remis à zéro au cours d'une étape E107. Le module de commande est alors en attente d'une action U2 sur la même touche de configuration au cours d'une étape E109.

Si aucune action n'est mise en œuvre au cours d'un temps d'une durée prédéterminée t5, un état En de configuration est sélectionné au cours d'une étape E115. En référence à la Table2 ci-dessous, l'état de configuration En pour n=0 correspond à un retour à l'état initial E0 du mode de configuration. Le procédé retourne à l'étape E103.

Si lors de l'étape E109, un appui U2 sur la touche de configuration a lieu, une analyse de cet appui U2 a lieu lors d'une étape E111.

Si cet appui est un appui particulier, notamment un appui d'une durée supérieure à une durée t3, par exemple t3 = 2s, celui-ci est interprété comme un ordre de sortie du mode de configuration. Le module de commande retourne alors en mode de fonctionnement, à l'étape E101.

Si cet appui U2 est un appui simple, notamment un appui d'une durée inférieure à une durée t2, inférieure à t3, le compteur n est incrémenté de 1 au cours d'une étape E113. Le module retourne alors à l'étape E109 d'attente d'une action U2 sur la même touche de configuration.

A l'issue d'une série de x appuis simples sur la touche de configuration, l'état de configuration sélectionné au cours de l'étape E115 est l'état Ex.

La diode électroluminescente est utilisée au cours de l'étape E115 pour signaler la configuration de cet état Ex. Elle clignote une ou plusieurs fois. Elle peut alternativement ou complémentairement changer de couleur. A la fin de ce ou ces clignotements, la diode s'éteint pendant une durée d1, puis se rallume de manière continue pour signaler que le mode de configuration est toujours actif. Ceci correspond notamment à un retour à l'étape E105.

Pour illustrer ce procédé, un exemple de sélection de l'état de configuration, référencé E9 dans la table 1 ci-dessus, est décrit ci-après.

Le module de commande étant en mode de fonctionnement, l'installateur actionne la touche de configuration par un appui U1 d'une durée supérieure à deux secondes. Cet appui particulier permet l'entrée dans le mode de configuration. Le module de commande se trouve alors dans l'état initial E0 du mode de configuration.

**Table 2**

| REFERENCE | ETAT DE CONFIGURATION | NOMBRE D'APPUIS U2 | ETAT DIODE |
|---|---|---|---|
| E0 | Etat initial | 0 | ON - Rouge |
| E1 | Bouton poussoir (Défaut) | 1 | 2 Flashs - Bleu |
| E2 | Interrupteur à bascule | 2 | 3 Flashs - Bleu |
| E3 | Bouton poussoir (Défaut) | 3 | 4 Flashs - Bleu |
| E4 | Interrupteur à bascule | 4 | 5 Flashs - Bleu |
| E5 | Etat mémorisé (Défaut) | 5 | 2 Flashs - Rose |
| E6 | Toujours éteint | 6 | 3 Flashs - Rose |
| E7 | Pas de temporisation, illimité (Défaut) | 7 | 2 Flashs - Jaune |
| E8 | 1 min | 8 | 3 Flashs - Jaune |
| E9 | 3min | 9 | 4 Flashs - Jaune |
| E10 | 5 min | 10 | 5 Flashs - Jaune |
| E11 | 10 min | 11 | 6 Flashs - Jaune |
| E12 | 30 min | 12 | 7 Flashs - Jaune |
| E13 | Sécurité 4h | 13 | 8 Flashs - Jaune |

A partir de cet état initial E0, signalé par un éclairage de la diode électroluminescente 30 en continu, l'installateur appuie sur et relâche la touche de configuration un nombre de fois nécessaire pour sélectionner l'état souhaité. La Table 2 ci-dessus reprend des éléments de la Table 1 et montre également, en dernière colonne, l'état ou la séquence d'états que peut prendre la diode électroluminescente pour chaque référence d'état de configuration, Dans l'exemple et selon les données de la Table 2, neuf appuis sont nécessaires pour sélectionner l'état référencé E9. A l'issue de cette séquence d'appuis suivie par une durée prédéterminée t5 sans appui, par exemple 500ms, la sélection de l'état de configuration E9, est active. La diode électroluminescente 30 clignote, par exemple quatre fois, en éclairant avec une couleur particulière, puis s'éteint. Le module retourne dans l'état initial du mode de configuration à l'étape E103 et la diode électroluminescente 30 se rallume de nouveau au cours de l'étape E105. L'installateur peut alors régler un autre état ou sortir du mode de configuration. Une durée t4 sans appui, par exemple t4 = 3s, permet également la sortie du mode de configuration.

Comme vu précédemment, un premier appui particulier U1, par exemple d'une durée de t1 = 2s, permet l'entrée ou la sortie du mode de configuration. Un troisième appui particulier U3, par exemple d'une durée t6 supérieure à la durée du premier appui particulier, par exemple 7s, permet de rétablir l'ensemble des catégories de configuration à leur état par défaut. Selon l'exemple de la Table 1, cela signifie que le type d'interrupteur mural correspond à des boutons poussoirs, que le statut de la charge électrique après une coupure d'alimentation revient à son état mémorisé avant la coupure et qu'aucune temporisation n'est active.

Le signalement du mode de configuration par la diode électroluminescente 30, en particulier de son état initial E0, permet de simplifier les ergonomies de configuration. En particulier, l'ensemble des états de configuration peut correspondre à des séquences consécutives de nombres d'appui sur une même touche de configuration CONF.

Le procédé de fonctionnement comprend en outre avantageusement une séquence d'étapes permettant la duplication de la configuration d'un premier module de commande 10 vers un deuxième module de commande 110. Ces étapes mettent en œuvre notamment une communication entre les deux modules de commande. La touche de configuration CONF du premier module de commande et/ou du deuxième module de commande peut avantageusement être utilisée dans cette séquence d'étapes de duplication dans la mesure où l'interface homme-machine 11 du module de commande 10, 110 est limitée. Toutefois, comme illustré à la figure 1, 2 ou 3, l'interface homme-machine 11 du module de commande 10 comprend en outre une touche de programmation PROG. Cette touche de programmation PROG peut être de manière similaire à la touche de configuration CONF, un bouton poussoir.

Cette touche de programmation PROG est utilisée entre autres pour appairer le module de commande avec un ou plusieurs émetteurs radiofréquence distants, conformément à des procédés connus.

Ces émetteurs radiofréquence distants 5 sont par exemple des télécommandes simples, à boutons de commande, des télécommandes intelligentes, munies d'écrans de commande, des tablettes ou téléphones intelligents ou des box domotiques contrôlées elles-mêmes par des tablettes ou téléphones intelligents.

Le module de commande 10 peut également être appairé avec un module de commande émetteur, lequel peut être installé en lieu et place d'un interrupteur mural 4 ou en parallèle avec un tel interrupteur mural 4.

Le module de commande 10 peut également être appairé avec un capteur ou une box domotique. Celle-ci peut notamment servir de passerelle de commande entre des émetteurs radiofréquence distants 5 ou capteurs distants et le module de commande 10, en retransmettant les ordres de commande qu'elle reçoit au module de commande 10.

La touche de programmation PROG peut être utilisée de manière similaire à la touche de configuration CONF. Elle permet en effet l'entrée dans un mode de programmation, distinct du mode de fonctionnement et distinct du mode de configuration. Toutefois, pour distinguer le mode de programmation du mode de configuration, il est nécessaire de ne pas le signaler de manière équivalente au mode de configuration. La diode électroluminescente peut ainsi être utilisée en éclairage continu, mais avec une couleur distincte du mode de configuration, ou éclairer par intermittence.

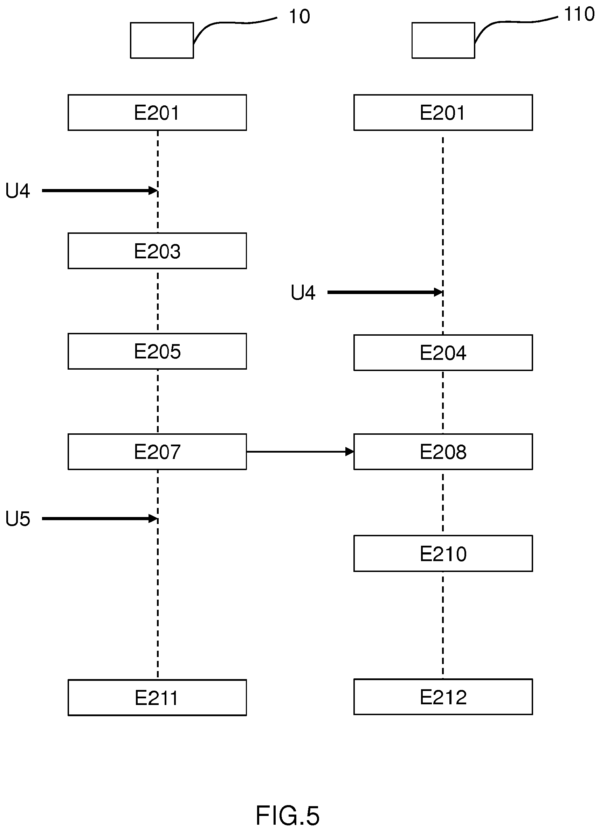

La duplication de la configuration du premier module de commande 10 vers le deuxième module de commande 110 non configuré est illustrée à la figure 5. Cette duplication peut avoir lieu à partir d'un quatrième mode : le mode de duplication.

L'entrée dans ce quatrième mode peut être obtenue par exemple par un quatrième appui particulier U4 sur la touche de configuration lorsque le premier module de commande 10 est en mode de fonctionnement, lors d'une étape 201. Par exemple, l'appui particulier U4 est supérieur à la durée du premier ou deuxième appui particulier U1, U2 mais inférieur à la durée d'appui du troisième appui particulier U3.

Alternativement, le quatrième appui particulier est un appui combiné sur les deux touches de programmation PROG et de configuration CONF du premier module de commande 10.

Ce quatrième appui particulier U4 doit être répété sur le deuxième module de commande 110 non configuré lorsque le deuxième module de commande 110 est en mode de fonctionnement, lors d'une étape 201. Le quatrième appui particulier est interprété par le microprocesseur 20 du premier module de commande 10 ou par le microprocesseur 120 du deuxième module de commande 110 comme une requête d'entrée dans le mode de duplication, au cours d'une étape E203, respectivement d'une étape E204.

En mode de duplication, le premier module de commande 10 compile ses états de configuration au cours d'une étape E205, de sorte à pouvoir les transmettre au deuxième module de commande à travers un ou plusieurs messages radiofréquence lors d'une étape E207. Lorsque les deux modules de commande 10, 110 sont en mode de duplication, un nouvel appui U5 sur une des touches du premier module de commande 10 provoque l'émission par le module d'émission et de réception radiofréquence 12 du ou des messages radiofréquence contenant la compilation des états de configuration du premier module de commande 10.

A la réception de ce ou de ces messages radiofréquence, le deuxième module de commande enregistre ces états de configuration comme ses propres états de configuration, au cours d'une étape E208.

Des signaux de confirmation peuvent être émis suite à ces étapes pour signaler le bon fonctionnement de l'émission ou de la réception des états de configuration dupliqués, par le premier module de commande 10 et/ou par le deuxième module de commande 110, au cours d'une étape E210. Ceux-ci peuvent être émis par la diode électroluminescente 30 du premier ou du deuxième module de commande 10, 110.

Un troisième module peut également être configuré de manière similaire.

Au cours d'une étape E211, respectivement E212, les deux modules de commande 10, 110 sortent de leur mode de configuration, par exemple après expiration d'une durée prédéterminée. Ils sont alors configurés de la même manière.

## Revendications

1. Procédé de fonctionnement d'un module de commande (10) d'une charge électrique (1), notamment d'une lampe, le module de commande (10) étant compris dans une installation domotique (100) et comprenant:
- Un module d'émission et de réception radiofréquence (12),
- Au moins un commutateur électronique (16),
- Des conducteurs d'alimentation (L1, N1), adaptés à être connectés à des lignes d'alimentation du secteur (L, N),
- Une unité électronique (22), dont une entrée est reliée au module d'émission et de réception radiofréquence (12) et dont une sortie active le commutateur électronique (16),
- Une touche de configuration (CONF),
- Une diode électroluminescente (30),
le procédé de fonctionnement comprenant une étape (E103) de basculement d'un mode de fonctionnement à un mode de configuration, obtenu par une action (U1) sur la touche de configuration (CONF),
le mode de configuration comprenant un état initial (E0), signalé par un état allumé ininterrompu de la diode électroluminescente (30) et une pluralité d'états de configuration (Ex, En) accessibles par des actions (U2) sur la touche de configuration (CONF), la configuration de multiples états de configuration intervenant à partir de la seule touche de configuration (CONF),
le procédé de fonctionnement comprenant une action (U1) sur la touche de configuration sous forme d'un premier appui particulier dans le mode de fonctionnement sur la touche de configuration (CONF) permettant le basculement du module du mode de fonctionnement au mode de configuration et une action (U3) sous forme d'un deuxième appui particulier dans le mode de configuration permettant la sortie du mode de configuration et le retour au mode de fonctionnement,
le procédé de fonctionnement comprenant une étape de comptage (E113) du nombre d'actions sur la touche de configuration et de sélection d'un état de configuration (En) selon le nombre (n) d'actions sur la touche de configuration,
le procédé de fonctionnement comprenant une étape d'analyse (E111) de la durée d'un appui sur la touche de configuration avant un relâché de la touche, un appui simple (U2) ayant une durée prédéfinie (t2) et un appui particulier (U2, U3) ayant une durée supérieure à la durée d'un appui simple,
à l'issue d'une série de x appuis simples sur la touche de configuration, l'état de configuration sélectionné étant l'état Ex,
la diode électroluminescente étant utilisée pour signaler la configuration de cet état Ex en clignotant une ou plusieurs fois avec une couleur particulière, la séquence d'états que peut prendre la diode électroluminescente étant définie pour chaque référence d'état de configuration.

2. Procédé de fonctionnement selon la revendication précédente, **caractérisé en ce qu'**il comprend une étape de retour dans l'état initial (EO) du mode de configuration après une durée prédéterminée (t5) suivant la sélection d'un état de configuration (En).

3. Procédé de fonctionnement selon l'une des revendications précédentes, **caractérisé en ce qu'**il comprend une étape de retour dans le mode de fonctionnement après une durée prédéterminée (t4) sans action sur la touche de configuration dans le mode de configuration.

4. Procédé de fonctionnement selon l'une des revendications précédentes, **caractérisé en ce qu'**il comprend une étape de retour dans le mode de fonctionnement suite à une coupure d'alimentation du module de commande (10).

5. Procédé de fonctionnement selon la revendication précédente, **caractérisé en ce que** chaque séquence particulière d'état de la diode électroluminescente (30) débute par un passage de la diode électroluminescente (30) par un état éteint, suivi par un clignotement de la diode.

6. Procédé de fonctionnement selon l'une des revendications précédentes, **caractérisé en ce que**, le module de commande (10) comprenant une touche de programmation (PROG), le procédé comprend une étape d'appairage avec un émetteur radiofréquence distant (5), réalisée suite à une action sur la touche de programmation (PROG).

7. Procédé de fonctionnement selon la revendication précédente, **caractérisé en ce que** les actions sur la touche de programmation (PROG) sont ignorées lorsque le module de commande (10) se trouve dans le mode de configuration.

8. Procédé de fonctionnement selon l'une des revendications précédentes, **caractérisé en ce qu'**un état de configuration (En) est choisi parmi les catégories de configuration suivantes :
- Remise à zéro des paramètres de configuration
- Choix du type d'interrupteur filaire associé au module de commande,
- Sélection du statut après une coupure de courant
- Gestion de temporisation.

9. Procédé de fonctionnement selon l'une des revendications précédentes, **caractérisé en ce qu'**il comprend une séquence d'étapes de duplication de la configuration d'un premier module de commande (10) vers un deuxième module de commande (110).

10. Module de commande (10, 110) d'une charge électrique, notamment d'une lampe, le module de commande comprenant
- Un module d'émission et de réception radiofréquence (12),
- Au moins un commutateur électronique (16),
- Des conducteurs d'alimentation (L1, N1), adaptés à être connectés à des lignes d'alimentation du secteur (L, N),
- Une unité électronique (22), dont une entrée est reliée au module d'émission et de réception radiofréquence (12) et dont une sortie est adaptée à activer le commutateur électronique (16),
le module comprenant une touche de configuration (CONF) et une diode électroluminescente (30) et étant adapté à fonctionner suivant le procédé de fonctionnement selon l'une des revendications précédentes, suivant un mode de fonctionnement et suivant un mode de configuration, le mode de fonctionnement étant distingué par un état éteint de la diode électroluminescente (30).

## Patentansprüche

1. Verfahren zum Betreiben eines Steuermoduls (10) einer elektrischen Last (1), insbesondere einer Lampe, wobei das Steuermodul (10) in einer Hausautomatisierungsanlage (100) enthalten ist und umfasst :
- Ein Radiofrequenz- Sende- und Empfangsmodul (12),
- Mindestens ein elektronischer Schalter (16),
- Stromversorgungsleiter (L1, N1), die für den Anschluss an Netzversorgungsleitungen (L, N) geeignet sind,
- Eine elektronische Einheit (22), deren Eingang mit dem Radiofrequenz-Sende- und Empfangsmodul (12) verbunden ist und deren Ausgang den elektronischen Schalter (16) aktiviert,
- Eine Konfigurationstaste (CONF),
- Eine lichtemittierende Diode (30),
das Betriebsverfahren einen Schritt (E103) zum Umschalten von einem Betriebsmodus auf einen Konfigurationsmodus umfasst, der durch eine Betätigung (U1) der Konfigurationstaste (CONF) erreicht wird,
der Konfigurationsmodus einen Anfangszustand (E0), der durch ein ununterbrochenes Leuchten der Leuchtdiode (30) angezeigt wird, und eine Vielzahl von Konfigurationszuständen (Ex, En) umfasst, auf die durch Betätigen (U2) der Konfigurationstaste (CONF) zugegriffen werden kann, wobei die Konfiguration mehrerer Konfigurationszustände von der einzigen Konfigurationstaste (CONF) aus erfolgt,
wobei das Betriebsverfahren eine Aktion (U1) auf die Konfigurationstaste in Form eines ersten besonderen Drucks im Betriebsmodus auf die Konfigurationstaste (CONF), der das Umschalten des Moduls vom Betriebsmodus in den Konfigurationsmodus ermöglicht, und eine Aktion (U3) in Form eines zweiten besonderen Drucks im Konfigurationsmodus, der das Verlassen des Konfigurationsmodus und die Rückkehr zum Betriebsmodus ermöglicht, umfasst,
das Betriebsverfahren einen Schritt zum Zählen (E113) der Anzahl des Betätigungen der Konfigurationstaste und zur Auswahl eines Konfigurationszustands (En) gemäß der Anzahl (n) der Betätigungen der Konfigurationstaste umfasst,
das Betriebsverfahren einen Schritt zur Analysierung (E111) der Dauer eines Drucks auf die Konfigurationstaste vor einem Loslassen der Taste umfasst, wobei ein einfacher Druck (U2) eine vordefinierte Dauer (t2) hat und ein besonderer Druck (U2, U3) eine Dauer hat, die größer als die Dauer eines einfachen Drucks ist,
nach einer Reihe von x einfachen Tastendrücken auf die Konfigurationstaste, wobei der gewählte Konfigurationszustand der Zustand Ex ist,
die Leuchtdiode verwendet wird, um die Konfiguration dieses Ex-Zustands durch einmaliges oder mehrmaliges Blinken mit einer bestimmten Farbe zu signalisieren, wobei die Sequenz von Zuständen, die die Leuchtdiode annehmen kann, für jede Konfigurationszustandsreferenz definiert ist.

2. Betriebsverfahren nach dem vorhergehenden Anspruch, **dadurch gekennzeichnet, dass** es einen Schritt zur Rückkehr in den Anfangszustand (E0) des Konfigurationsmodus nach einer vorbestimmten Zeitdauer (t5) nach der Auswahl eines Konfigurationszustands (En) umfasst.

3. Betriebsverfahren nach einem der vorhergehenden Ansprüche, **dadurch gekennzeichnet, dass** es einen Schritt umfasst, bei dem nach einer vorbestimmten Zeit (t4) ohne Betätigung der Konfigurationstaste im Konfigurationsmodus in den Betriebsmodus zurückgekehrt wird.

4. Betriebsverfahren nach einem der vorhergehenden Ansprüche, **dadurch gekennzeichnet, dass** es einen Schritt zur Rückkehr in den Betriebsmodus nach einer Unterbrechung der Stromversorgung des Steuermoduls (10) umfasst.

5. Betriebsverfahren nach dem vorhergehenden Anspruch, **dadurch gekennzeichnet, dass** jede bestimmte Sequenz des Zustands der Leuchtdiode (30) mit einem Übergang der Leuchtdiode (30) in einen ausgeschalteten Zustand beginnt, gefolgt von einem Blinken der Diode.

6. Betriebsverfahren nach einem der vorhergehenden Ansprüche, **dadurch gekennzeichnet, dass**, da das Steuermodul (10) eine Programmiertaste (PROG) umfasst, das Verfahren einen Schritt zur Paarung mit einem entfernten Radiofrequenzsender (5) umfasst, der nach einer Betätigung der Programmiertaste (PROG) durchgeführt wird.

7. Betriebsverfahren nach dem vorhergehenden Anspruch, **dadurch gekennzeichnet, dass** Aktionen auf der Programmiertaste (PROG) ignoriert werden, wenn sich das Steuermodul (10) im Konfigurationsmodus befindet.

8. Betriebsverfahren nach einem der vorhergehenden Ansprüche, **dadurch gekennzeichnet, dass** ein Konfigurationszustand (En) aus den folgenden Konfigurationskategorien ausgewählt wird:
- Zurücksetzen der Konfigurationseinstellungen
- Auswahl des Typs des verdrahteten Schalters, der mit dem Steuermodul verbunden ist,
- Auswahl des Status nach einem Stromausfall
- Verwaltung von Zeitabschaltungen.

9. Betriebsverfahren nach einem der vorhergehenden Ansprüche, **dadurch gekennzeichnet, dass** es eine Folge von Schritten zum Duplizieren der Konfiguration von einem ersten Steuermodul (10) zu einem zweiten Steuermodul (110) umfasst.

10. Steuermodul (10, 110) für eine elektrische Last, insbesondere für eine Lampe, wobei das Steuermodul Folgendes umfasst
- Ein Radiofrequenz- Sende- und Empfangsmodul (12),
- Mindestens ein elektronischer Schalter (16),
- Stromversorgungsleiter (L1, N1), die für den Anschluss an Netzversorgungsleitungen (L, N) geeignet sind,
- Eine elektronische Einheit (22), deren Eingang mit dem Radiofrequenz- Sende- und Empfangsmodul (12) verbunden ist und deren Ausgang dazu geeignet ist, den elektronischen Schalter (16) zu aktivieren,
das Modul eine Konfigurationstaste (CONF) und eine Leuchtdiode (30) umfasst und dazu geeignet ist, nach dem Betriebsverfahren nach einem der vorhergehenden Ansprüche in einem Betriebsmodus und in einem Konfigurationsmodus zu arbeiten, wobei der Betriebsmodus durch einen ausgeschalteten Zustand der Leuchtdiode (30) unterschieden wird.

## Claims

1. A method of operating a control module (10) for an electrical load (1), in particular a lamp, the control module (10) being included in a home automation installation (100) and comprising :
- A radio frequency transmission and reception module (12),
- At least one electronic switch (16),
- Power supply conductors (L1, N1), suitable for connection to mains supply lines (L, N),
- An electronic unit (22), an input of which is connected to the radio frequency transmission and reception module (12) and an output of which activates the electronic switch (16),
- A configuration key (CONF),
- A light-emitting diode (30),
the operating method comprising a step (E103) of switching from an operating mode to a configuration mode, obtained by an action (U1) on the configuration key (CONF),
the configuration mode comprising an initial state (E0), indicated by an uninterrupted lit state of the light-emitting diode (30) and a plurality of configuration states (Ex, En) accessible by actions (U2) on the configuration key (CONF), the configuration of multiple configuration states taking place from the single configuration key (CONF),
the operating method comprising an action (U1) on the configuration key in the form of a first particular press in the operating mode on the configuration key (CONF) enabling the module to be switched from operating mode to configuration mode and an action (U3) in the form of a second particular press in the configuration mode enabling the configuration mode to be exited and the operating mode to be returned to,
the operating method comprising a step of counting (E113) the number of actions on the configuration key and selecting a configuration state (En) according to the number (n) of actions on the configuration key,
the operating method comprising a step (E111) of analyzing the duration of a press on the configuration key before the key is released, a single press (U2) having a predefined duration (t2) and a particular press (U2, U3) having a duration greater than the duration of a single press,
after a series of x single presses of the configuration key, with the selected configuration state being Ex,
the light-emitting diode being used to signal the configuration of this Ex state by flashing one or more times with a particular color, the sequence of states that the light-emitting diode can assume being defined for each configuration state reference.

2. Operating method according to the preceding claim, **characterized in that** it comprises a step of returning to the initial state (E0) of the configuration mode after a predetermined time (t5) following the selection of a configuration state (En).

3. Operating method according to one of the preceding claims, **characterized in that** it comprises a step of returning to the operating mode after a predetermined duration (t4) without action on the configuration key in the configuration mode.

4. Operating method according to one of the preceding claims, **characterized in that** it comprises a step of returning to the operating mode following a power cut to the control module (10).

5. Method of operation according to the preceding claim, **characterized in that** each particular sequence of states of the light-emitting diode (30) begins with the light-emitting diode (30) passing through an off state, followed by flashing of the diode.

6. Operating method according to one of the preceding claims, **characterized in that**, the control module (10) comprising a programming key (PROG), the method comprises a pairing step with a remote radio frequency transmitter (5), carried out following an action on the programming key (PROG).

7. Operating method according to the preceding claim, **characterized in that** actions on the programming key (PROG) are ignored when the control module (10) is in configuration mode.

8. An operating method according to one of the preceding claims, **characterized in that** a configuration state (En) is selected from the following configuration categories :
- Resetting configuration parameters
- Choice of the type of wired switch associated with the control module,
- Selecting the status after a power cut
- Timer management.

9. Operating method according to one of the preceding claims, **characterized in that** it comprises a sequence of steps for duplicating the configuration of a first control module (10) to a second control module (110).

10. Control module (10, 110) for an electrical load, in particular a lamp, the control module comprising
- A radio frequency transmission and reception module (12),
- At least one electronic switch (16),
- Power supply conductors (L1, N1), suitable for connection to mains supply lines (L, N),
- An electronic unit (22), an input of which is connected to the radio frequency transmission and reception module (12) and an output of which is adapted to activate the electronic switch (16),
the module comprising a configuration key (CONF) and a light-emitting diode (30) and being adapted to operate according to the method of operation according to one of the preceding claims, according to an operating mode and according to a configuration mode, the operating mode being distinguished by an off state of the light-emitting diode (30).
